# EUROPEAN PATENT APPLICATION

(11) **EP 4 574 492 A2**
(43) Date of publication of application: **25.06.2025**
(21) Application number: 24217670.9
(22) Date of filing: 05.12.2024
(51) Int. Cl.: B60K 1/04, H01M 50/244, H01M 50/249

(54) **IMPROVED SUPPORT SYSTEM FOR A VEHICULAR BATTERY**

(30) Priority: 14.12.2023 IT 202300026658
(71) Applicant: IVECO S.P.A., 10156 Torino (IT)
(72) Inventor: SIVIERO, Irene, 10156 TORINO (IT)
(74) Representative: Studio Torta S.p.A.

(57) **Abstract**

Vehicle assembly comprising a battery pack (6) and a fixing system (7) for fixing the battery pack (6) in a housing (2) of a vehicle (1),
the battery pack (6) comprising a base portion (6') and at least one wall (6a, 6b) defined by a portion of the battery pack (6) extending from the base portion (6'),
the fixing system (7) comprising first and/or second blocking means (8, 9) configured to make the battery pack (6) integral in the housing (2).

## Description

### CROSS-REFERENCE TO RELATED APPLICATIONS

This patent application claims priority from Italian patent application no. 102023000026658 filed on December 14, 2023, the entire disclosure of which is incorporated herein by reference.

### TECHNICAL SECTOR

The present invention relates to a support system for an electric battery.

The present invention has its preferred, although not exclusive, application in the support of a vehicular battery. Reference will be made to this application below by way of an example.

### PRIOR ART

There continues to be a need to electrify vehicles in order to reduce the emissions of pollutants, by supplying hybrid or electric vehicles.

For this purpose, it is necessary to provide electric batteries configured to store electric energy and to exchange it with electric machines to allow them to operate as a motor or generator.

These electric batteries are normally housed in vehicle compartments configured to maintain the electric batteries isolated from the external environment, so as not to be contaminated by external agents and so as to avoid the leakage of hazardous liquids from the batteries themselves.

It is therefore necessary to provide adequate support to these vehicular batteries in a manner to avoid their movement both during travel of the vehicle and during pre-established stresses, such as homologation or safety tests.

The known fixing systems are not sufficiently robust to fix the vehicular batteries in the aforesaid compartments.

For this purpose, it is known to fix the vehicular batteries by means of strap systems, so as to prevent any movement of them in the compartment.

However, these compartments are usually made in difficult to reach positions and therefore make it difficult to mount these strap systems around the battery system both during manufacturing and during maintenance of the vehicle.

There is therefore a need to provide support systems for vehicular batteries that are simultaneously efficient in fixing a vehicular battery in its compartment and economical and easy to mount.

The object of the present invention is therefore to satisfy the needs indicated here above, in an optimal and economical manner.

### SUMMARY OF THE INVENTION

The aforesaid object is achieved by a vehicle assembly as claimed in the attached claims, which form an integral part of the present description.

### BRIEF DESCRIPTION OF THE DRAWINGS

For a better understanding of the present invention, a preferred embodiment is described below, by way of nonlimiting example, with reference to the appended drawings, in which:
- Figure 1 is a perspective view of a portion of a vehicle comprising a battery fixed by means of a support system according to the invention;

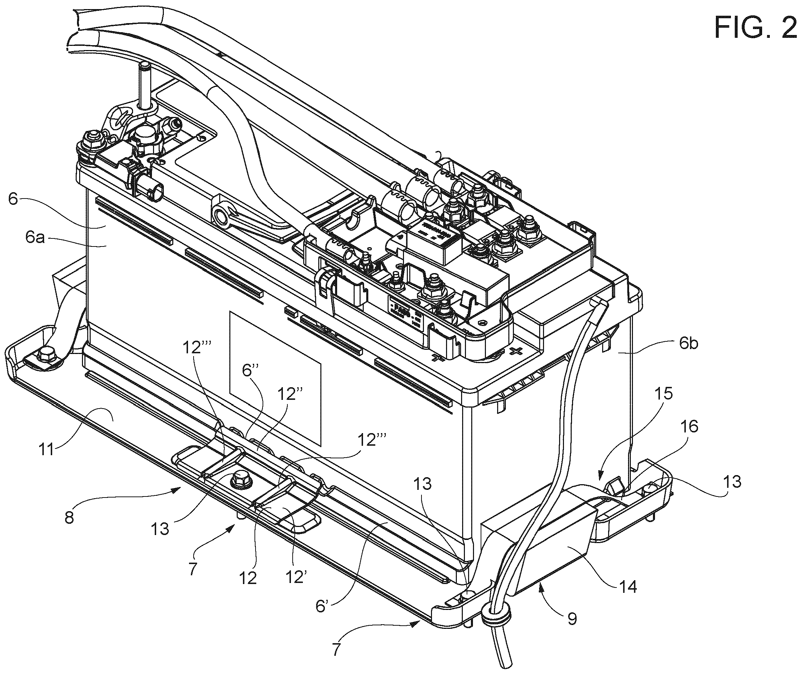

- Figure 2 is a perspective view of a battery assembly comprising a support system according to the invention;
- Figure 3 is a perspective view of a support system according to the invention;
- Figure 4 is a perspective view of an element of the support system according to the invention.

### DETAILED DESCRIPTION OF THE INVENTION

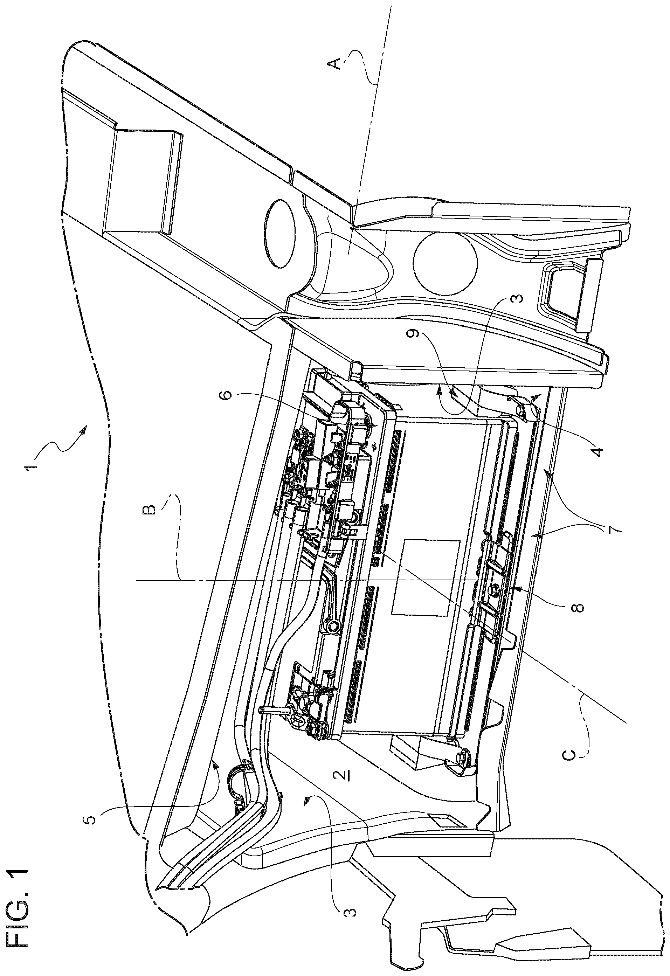

Figure 1 shows a portion of a vehicle 1, such as an LVC (Light Commercial Vehicle). In particular, said portion is a front portion of the vehicle 1 corresponding with the support platform of the driver's seat.

In detail, the vehicle 1 defines a housing 2 delimited by a pair of axial walls 3 along a longitudinal axis A of the vehicle, a bottom wall 4 and an upper wall 5 spaced along a vertical axis C perpendicular to the axis A.

In a direction along a transverse axis B, perpendicular to the axes A, B, the housing 2 is delimited by an inner wall (not visible) and selectively opened externally, for example by means of a hatch (not shown).

The housing 2 is configured to house a battery pack 6, for example comprising a single vehicular battery or several vehicular batteries, configured to be electrically connected to operating systems of the vehicle 1 configured to allow its operation and/or traction.

The battery pack 6 is opportunely fixed to one of the walls of the housing 2 by means of a support system 7 configured to prevent movement of the battery pack along the aforementioned longitudinal, transverse and vertical axes A, B, C.

In detail, the support system 7 comprises first blocking means 8 configured to prevent movement of the battery pack 6 by coupling a portion thereof to the aforesaid wall of the housing 2.

For the sake of simplicity, reference will be made below to an illustrated embodiment, in which the battery pack 6 is supported by the bottom wall 4 and spaced from the upper wall 5 and from the axial walls 3.

Advantageously, the battery pack 6 is supported by a plate 11 described in more detail below, housed in the housing 2 and operatively interposed between the battery pack 6 and the bottom wall 4.

In further detail, the battery pack 6 comprises a base portion 6" cooperating in contact with the bottom wall 4 and extending further with respect to one of the aforesaid longitudinal, transverse and vertical axes A, B, C with respect to the remaining portion of the battery pack 6.

In the embodiment described, said base portion 6" extends further with respect to the remaining battery portion 6 with respect to the longitudinal and transverse axes A, C.

In particular, in the embodiment described, the battery pack 6 has a substantially parallelepiped shape and therefore comprises a pair of side walls 6a distanced along the transverse axis C and a pair of axial walls 6b distanced along the longitudinal axis A.

The first blocking means 8 comprise essentially a shaped plate 12 configured to be fixed to the bottom wall 4 and configured to cooperate in contact with the base portion 6" of the battery 6 to maintain it fixed to the bottom wall 4.

In detail, the shaped plate 12 comprises a main portion 12' and a coupling portion 12'' extending from the main portion 12', in particular cantilevered from it with respect to a longitudinal axis thereof.

The shaped plate 12 may also comprise at least one rib 12‴ connecting to each other the main portion and the coupling portion 12'', so as to increase their robustness.

Advantageously, the shaped plate 12 is made of a single piece and, even more in particular, of a polymeric/plastic material.

The shaped plate 12 is advantageously fixed to the bottom wall 4 by means of connection means 13, such as threaded means, like a bolt.

Furthermore, the base portion 6" may be provided, at the coupling portion 12", with a corrugated profile 6‴ and equally the coupling portion 12" may be provided with a corresponding profile, so as to increase the coupling surface between the coupling portion 12" and the base portion 6" , making the coupling of the battery 6 to the housing 2 firmer.

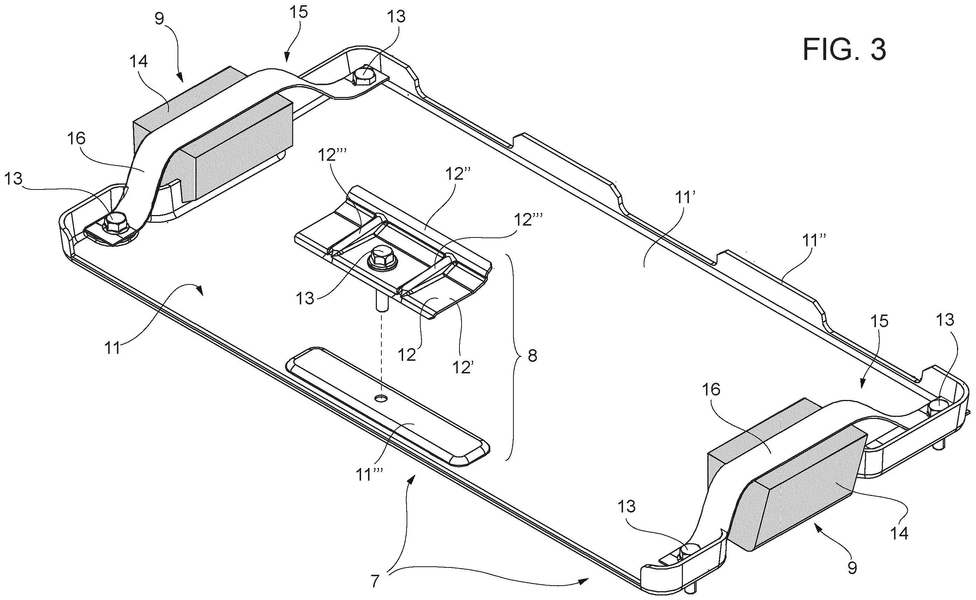

As emerges more clearly from Figure 3, the plate 11 comprises a flat portion 11' sized so as to house the entire battery pack 6, so that the base portion 6' thereof is entirely supported by it.

The flat portion is fixed to the bottom wall 4 by means of a plurality of connection means 13, such as the above type.

In further detail, the plate 11 comprises a cantilevered portion 11" extending along the vertical axis C on at least part of the perimeter of the flat portion 11', so as to define an edge, at least discontinuous, of containment. In particular, said cantilevered portion 11‴, as shown, may comprise profiles of variable extension along the vertical axis C.

At the fixing of the shaped plate 12, the flat portion 11' defines a hole for inserting the aforesaid connection means 13 and, in particular, defines a support portion 11‴, raised with respect to the flat portion 11', configured to support in contact the shaped plate 12.

The support system 7 further comprises, or in combination with the previous blocking means 8, second blocking means 9 configured to prevent the movement of the battery pack 6 cooperating in contact between a portion of it with a wall of the housing 2.

In particular, if first and second blocking means 8, 9 are present, the second blocking means 9 cooperate in contact with a different wall of the housing 2, in particular transverse, with respect to the wall on which the first blocking means 8 are fixed.

In detail, the second blocking means 9 comprise a pad 14 operatively interposed in contact between the battery 6 and one of the walls of the housing 2.

In the embodiment described, reference will be made to the axial walls 6b and to the axial walls 3 of the housing 2 for convenience.

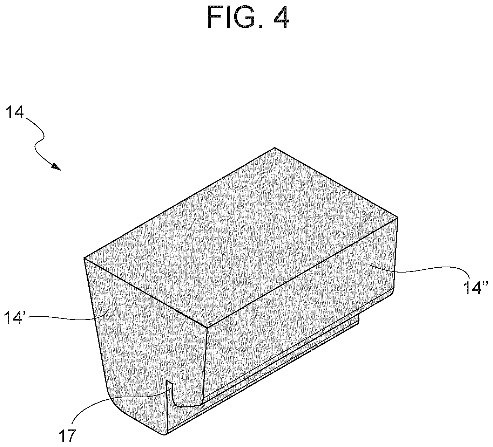

The pad 14 (Figure 4) is shaped so as to adapt to the shape of the axial walls 6b and the axial walls 3, so as to prevent clearance between the battery 6 and the housing 2 through interposition between them.

In detail, the pad 14 may be sized to be housed with preload between the battery 6 and the housing 2.

Advantageously, the pad 14 is carried by the cantilevered portion 11" of the plate 11, in particular, the pad 14 defines a main portion 14' and an appendix 14'' extending from the main portion 14" and separated from the main portion by a groove 17.

The groove 17 is sized so as to house inside it the cantilevered portion 11'' of the plate 11. In particular, the appendix 14'' extends along the vertical axis C minus the main portion 14', so that, when the pad 14 is housed on the cantilevered portion 11", the thickness of the flat portion 11" is compensated.

In particular, according to what is described above, the appendix 14'' cooperates in contact with the battery 6 while the main portion 14' cooperates in contact with the axial wall 3.

Advantageously, the pad 14 is made of a single piece and of a polymeric/plastic material.

The pad 14 is further fixed to the bottom wall 4 by means of retention means 15 configured, in particular, to compensate a movement along the vertical axis C of the pad 14.

In detail, such retention means 15 comprise a strap 16 fixed at its ends by means of connection means 13.

Advantageously, the retention means 15 are fixed by means of said connection means 13 that connect the plate 11 to the bottom wall 4.

As visible in the figures, two second blocking means 9 are present and configured to cooperate with two opposite walls 6b of the battery pack 6 and respective axial walls 4 of the housing 2.

Equally, several first blocking means 8 could be provided on the same edge of the base portion 6' of the battery pack 6 or on the opposite edges of it.

Operation of the embodiment of the vehicle assembly according to the invention described above is as follows.

Once the plate 11 is fixed, the battery 6 may be housed on it and fixed by means of the first and/or second blocking means 8 and 9, which compensate any forces and/or torques acting along the three longitudinal, transverse and vertical axes A, B, C.

The benefits of the vehicle assembly according to the invention are clear from the above.

Thanks to the fixing system provided, it is possible to compensate forces and/or torques acting along the three longitudinal, transverse and vertical axes A, B, C acting between the battery 6 and the housing 2, preventing its detachment from the housing 2.

The possibility of damage to the battery 6 and leakage of toxic liquids is consequently reduced.

Furthermore, a firm fixing of the battery 6 reduces its movements and therefore safeguards its electrical connections with other operating elements of the vehicle.

Manufacture of the blocking means as elements in a single polymeric/plastic piece makes them particularly economical.

The geometrical adaptations between the shaped plate 12 and the pad 14 and the housing 2 (and/or the plate 11) and the battery 6 further allow a firmer connection of the battery 6 in the housing 2.

Furthermore, fixing of the blocking means in the housing, by means of connection means 13 or retention means 15, allows reduction of the assembly times of the battery and its maintenance, allowing easy access for assembly/disassembly of them.

In particular, the combined action of the first and second blocking means acts synergically to reinforce the fixing of the battery, preventing its undesired movements in any driving or test conditions.

In conclusion, it is clear that changes and variants can be made to the vehicle assembly according to the present invention without thus deviating from the scope of protection as defined by the claims.

Clearly, the shape and arrangement of the battery and the housing 2 and consequently the shape and positioning of the plate 11 and of the first and second blocking means may vary.

Similarly, the number and the shape of the first and second blocking means may vary, as may their material and their fixing in the housing 2.

## Claims

1. Vehicle assembly comprising a battery pack (6) and a fixing system (7) for fixing said battery pack (6) in a housing (2) of a vehicle (1),
said housing (2) extending along a longitudinal axis (A), a transverse axis (C) and a vertical axis (B) perpendicular to each other and being defined at least by a first pair of walls (3) and a bottom wall (4)
said battery pack (6) comprising a base portion (6') and at least one wall (6a, 6b) defined by a portion of said battery pack (6) extending from said base portion (6'),
said fixing assembly (7) comprising
- first blocking means (8) configured to be fixed to said bottom wall (4) and to cooperate in contact with said base portion (6') to prevent the movement of said battery along at least one of said longitudinal, transverse and/or vertical axes (A, B, C).
- second blocking means (9) configured to be operatively interposed to cooperate in contact with said battery pack (6) and one of said first walls (3) to prevent the movement of said battery along at least one of said longitudinal, transverse and/or vertical axes (A, B, C).

2. Vehicle assembly according to claim 1, wherein said first blocking means (8) comprise a shaped plate (12) comprising a flat portion (12') which can be fixed by means of connection means (13) to said bottom wall (4) and a coupling portion (12'') extending from said flat portion (12') and configured to cooperate in contact with said base portion (6').

3. Vehicle assembly according to claim 2, wherein said shaped plate (12) includes at least one rib (12‴) extending between said flat portion (12') and said coupling portion (12).

4. Vehicle assembly according to claim 2 or 3, wherein said shaped plate (12) is made of a single piece.

5. Vehicle assembly according to claim 2, 3 or 4, wherein said shaped plate (12) is made of polymeric/plastic material.

6. Vehicle assembly according to one of claims 2 to 5, wherein said base portion (6') defines a corrugated profile (6"), said coupling portion (12'') being shaped to correspond to said corrugated profile (6‴).

7. Vehicle assembly according to one of the previous claims, further comprising a plate (11) operatively interposed between said battery pack (6), said bottom wall (4) and said first blocking means (8).

8. Vehicle assembly according to one of the previous claims, wherein said second blocking means (9) comprise a pad (14) operatively interposed in contact between said battery pack (6) and one of said pair of walls (3) of said housing (2).

9. Vehicle assembly according to one of the previous claims, wherein said pad (14) comprises a main portion (14') and an appendix (14'') extending from said main portion (14') and separated by a groove (17), said groove (17) being configured to house a cantilevered portion (11'') integral with said bottom wall (4).

10. Vehicle assembly according to claim 9, when dependent on claim 7, wherein said cantilevered portion (11'') is part of said plate (11), said plate (11) comprising a flat portion (11) and said cantilevered portion (11'') extending over at least part of the perimeter of said flat portion (11).

11. Vehicle assembly according to one of claims 8 to 10, wherein said pad (14) is fixed to said bottom wall (4) via retention means (15).

12. Vehicle assembly according to claim 11, wherein said retention means (15) comprise a strap (16).

13. Vehicle assembly according to claim 11 or 12, when dependent on claim 11, wherein said retention means (15) are connected to said bottom wall (4) via connection means (13) further configured to connect said flat portion (11') to said bottom wall (4).

14. Vehicle assembly according to one of claims 8 to 13, wherein said pad (14) is made of a single piece.

15. Vehicle assembly according to one of claims 8 to 14, wherein said pad (14) is made of polymeric/plastic material.

16. Vehicle assembly comprising a battery pack (6) and a fixing system (7) for fixing said battery pack (6) in a housing (2) of a vehicle (1),
said housing (2) extending along a longitudinal axis (A), a transverse axis (C) and a vertical axis (B) perpendicular to each other and being defined at least by a first pair of walls (3) and a bottom wall (4)
said battery pack (6) comprising a base portion (6') and at least one wall (6a, 6b) defined by a portion of said battery pack (6) extending from said base portion (6'),
said fixing assembly (7) comprising second blocking means (8) configured to be operatively interposed to cooperate in contact between said battery pack (6) and one of said first walls (3) to prevent the movement of said battery along at least one of said longitudinal, transverse and/or vertical axes (A, B, C).

17. Vehicle (1) defining a housing (2) suitable for housing a vehicle assembly according to one of the previous claims.
